# EUROPEAN PATENT SPECIFICATION

(11) **EP 3 073 661 B1**
(45) Date of publication and mention of the grant of the patent: **17.02.2021**
(21) Application number: 14873834.7
(22) Date of filing: 19.06.2014
(51) Int. Cl.: H04L 1/00

(54) **MULTI-PATH TRANSMISSION METHOD AND SYSTEM, DATA TRANSMITTING DEVICE, AND DATA RECEIVING DEVICE**
MEHRWEGE-ÜBERTRAGUNGSVERFAHREN UND -SYSTEM, DATENÜBERTRAGUNGSVORRICHTUNG UND DATENEMPFANGSVORRICHTUNG
PROCÉDÉ ET SYSTÈME D'ÉMISSION À TRAJETS MULTIPLES, DISPOSITIF D'ÉMISSION DE DONNÉES ET DISPOSITIF DE RÉCEPTION DE DONNÉES

(30) Priority: 26.12.2013 CN 201310729106
(43) Date of publication of application: 28.09.2016
(73) Proprietor: ZTE Corporation, Shenzhen City, Guangdong 518057 (CN)
(72) Inventor: XIE, Feng, Shenzhen Guangdong 518057 (CN); XU, Jin, Shenzhen Guangdong 518057 (CN); XU, Jun, Shenzhen Guangdong 518057 (CN); YUAN, Zhifeng, Shenzhen Guangdong 518057 (CN); LUO, Wei, Shenzhen Guangdong 518057 (CN); YAN, Wenjun, Shenzhen Guangdong 518057 (CN)
(74) Representative: Tiburzi, Andrea
(86) International application number: PCT/CN2014/080272
(87) International publication number: WO 2015/096419

(56) References cited:
- WO-A1-2005/022812
- CN-A- 1 173 087
- CN-A- 101 009 663
- CN-A- 101 867 937
- CN-A- 101 938 334
- CN-A- 102 325 009
- US-A1- 2013 064 198
- US-A1- 2013 195 106
- DAN-CRISTIAN TOMOZEI: "WIRELESS PROTOCOLS USING NETWORK CODING:REPORT ON ON STATE-OF-THE-ART", INTERNET CITATION, 22 January 2009 (2009-01-22), pages 1-29, XP002606798, Retrieved from the Internet: URL:http://www.n-crave.eu/images/pdf/D2.1. pdf [retrieved on 2010-10-14]
- ERICSSON: "L2 transport of SRBs and relation to RLF handling", 3GPP DRAFT; R2-134221 - L2 TRANSPORT OF SRBS AND RELATION TO RLF HANDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. RAN WG2, no. San Francisco, USA; 20131111 - 20131115 13 November 2013 (2013-11-13), XP050736968, Retrieved from the Internet: URL:http://www.3gpp.org/ftp/Meetings_3GPP_ SYNC/RAN/RAN2/Docs/ [retrieved on 2013-11-13]

## Description

### Technical Field

The present invention relates to the field of wireless communication technologies, and more particularly, to a wireless multipath transmission method and system, a wireless data transmitting device and a wireless data receiving device.

### Background of the Related Art

In a wireless cellular communication system, an evolved node B (eNB, or Base Station) is a device providing a wireless access to a user equipment (UE) which may also be referred to as a terminal, the eNB and the UE communicate wirelessly through electromagnetic waves. One eNB may provide one or more serving cells, and the wireless communication system may provide wireless coverage for terminals within a certain geographical area via the serving cells.

The wireless communication system needs to deploy eNBs in a large coverage to provide users with the wireless communication in a wide range, this eNB is generally referred to as a macro evolved node B (Macro eNB/Macro BS, Macro Base Station), and its serving cell is usually referred to as a macro cell. In addition, considering different user needs and different using environments, the wireless communication system requires, under certain circumstances or scenarios, to provide the users with wireless communications services that can make up for coverage holes or provide higher quality, therefore, some small eNBs with small coverage and low transmit power are used and called as transmission Points (TPs). These small eNBs include Pico eNBa or Pico BSs and Femto eNBs or Femto BSs, herein the Femto BS may also be referred to as home evolved nodeBs (HNBs or HeNBs) or femto eNBs, and cells provided by the Pico eNBs and the HeNBs are called pico cells and femto cells. A node corresponding to the small eNB is also known as a low power node (LPN), and a cell corresponding to these nodes is also known as a small cell.

The wireless cellular communication system gradually developed a variety of modes in the evolution process, such as the second generation mobile communication technologies such as Global System for Mobile Communications (GSM), Code Division Multiple Access (CDMA), the third generation mobile communication technologies such as Wideband Code Division Multiple Access (WCDMA), Time Division-Synchronous Code Division Multiple Access (TD-SCDMA), CDMA-2000, and Worldwide Interoperability for Microwave Access (Wimax), the evolved third or fourth generation mobile communication technologies such as Long Term Evolution (LTE), LTE-advanced, and Wimax2.0. Herein, some technologies also have corresponding access network names, for example, the GSM corresponds to GSM EDGE Radio Access Network (GERAN), the WCDMA and the TD-SCDMA correspond to UMTS Terrestrial Radio Access Network (UTRAN), the LTE/LTE-A corresponds to the Evolved UTRAN (E-UTRAN). In addition to the wireless cellular communication system, the wireless communication system further includes Wireless Local Access Network (WLAN, or known as wireless fidelity (WIFI)), whose air intcrfacc standards arc IEEE802.11 series standards, including 802.11a, 802.1 In, 802.11ac, etc., and the maximum transmission rates supported by them are different. Because the WIFI spectrum is free and the cost of WIFI chip is low, the deployment and application of a wireless LAN access point (AP, also called access node) can provide a low-cost wireless access and load distribution for operators and users, the WIFI AP can also be seen as a low-power node. Currently, the wireless communication technology is developing to the fifth-generation (5G). A variety of wireless communication technologies (including the 5G wireless communication technologies and related wireless communication technologies) might coexist for a long term.

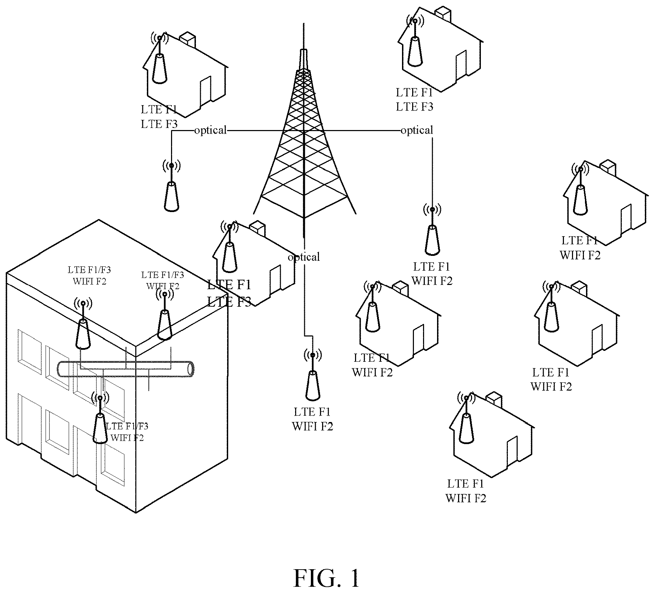

FIG. 1 is a schematic diagram of the heterogeneous network of a multimode evolved node B in the related art, as shown in FIG. 1, in a multilayer heterogeneous network, various types and modes of eNBs/cells coexist, for example, macro eNBs, micro eNBs, macro cells, small cells, LTE, and WIFI/WLAN coexist. At present, the multimode small eNBs deployed in the industry generally support three or more modes, such as UMTS, LTE (including FDD-LTE and/or TDD-LTE) and WLAN, and may also support modes of the second, third and/or fifth-generation wireless communication technologies.

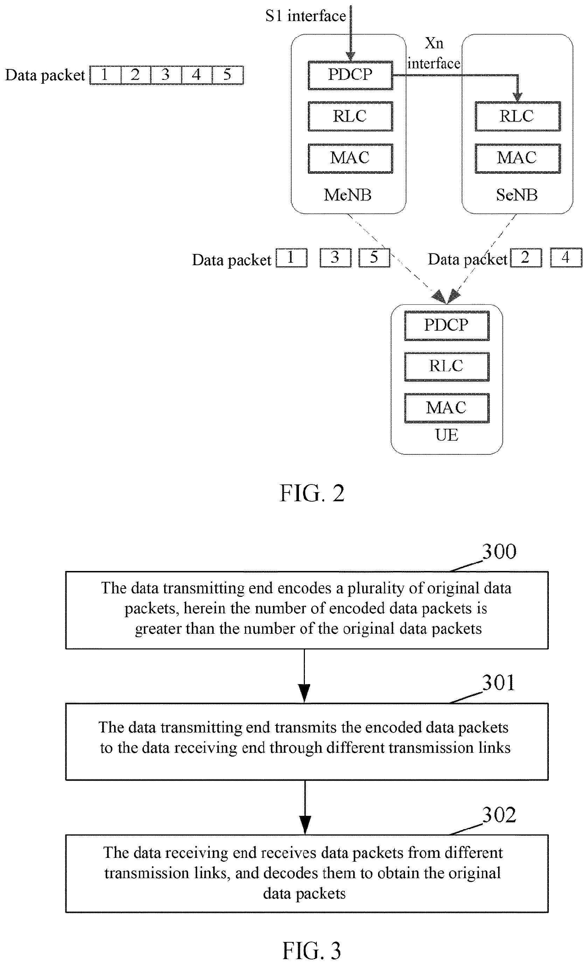

As shown in FIG. 1, in order to take advantages of resources of different cells and/or different modes between different eNBs, in the schematic diagram of implementing the multipath transmission method in the related art shown in FIG. 2, the data of one user are transmitted via a plurality of, that is, two or more, paths, at this time, there will be an anchor, and FIG. 2 takes the MeNB (Macro eNB) as an anchor for example, and the MeNB as the anchor will distribute the user data, part of the data, such as packet 1, packet 3 and packet 5 in FIG. 2 are distributed to the UE by the MeNB itself, the other part of the data, such as packet 2 and packet 4 in FIG. 2, are forwarded to the small eNB (SeNB) and then forwarded by the SeNB to the UE. Thus, in the multipath transmission method in the related art, the UE will receive data from the two links from the MeNB and the SeNB.

If the two links from the MeNB and the SeNB are both normal, the UE receives the packet 1, the packet 3 and the packet 5 from the MeNB, and receives the packet 2 and the packet 4 from the SeNB, so that the UE receives the complete data. However, assuming that the link from the SeNB fails, then the packet 2 and the packet 4 cannot be transmitted to the UE through this link, which will cause the entire data transmission fails. Taking one TCP transmission application, such as the FTP download, for example, at this time, due to the delivery failure of the packet 2 and the packet 4, the TCP transmission may be interrupted or suffer significant throughput decrease. Similarly, if the link from the MeNB fails, the packet 1, the packet 3 and the packet 5 cannot be transmitted to the UE via the MeNB, resulting in that the entire data transmission fails.

In the multipath transmission method in the related art, the reason of the failure of the entire data packet transmission lies in that the data packet distribution at the anchor point is simply distributing the data packets to different links to transmit, while the statuses of the wireless links are difficult to predict, this simple distribution mechanism is difficult to match the actual situation of the changing wireless links. Moreover, even if each link works normally, the delay of each link as well as the bandwidth of each link allocated to the user are likely to be different, a desired distribution should be a distribution based on the proportion of the bandwidth allocated by each link to the user, but in fact the bandwidth of each link in the wireless links allocated to the user is dynamic and unpredictable, therefore, because the multipath distribution strategy is difficult to match the actual situation of each link, there is a situation that too many data packets are distributed to poor links, while too few data packets are distributed to good links, resulting in that the data transmission efficiency is significantly limited, the throughput is decreased and the delay is increased. The worst case is that, when a link congests or a link fails, the entire data transmission will be interrupted.

The document US2013/064198A1 discloses a method and apparatus for wireless communication between stations addressable via an Internet Protocol network that includes a first station wirelessly communicating with a second station via a multi-path transport protocol (MTP) tunnel. The MTP tunnel manages at least a first IP data sub-flow over a first air interface and at least a second IP data sub-flow over a second air interface and allocates a first IP data flow to the at least two distinct IP data sub-flows over the at least two distinct air interfaces.

The document US2013/195106A1 discloses devices relating to data transfer between communication nodes via multiple heterogeneous paths. In various embodiments, network coding may be used to improve data flow and reliability in a multiple path scenario. TCP may also be used within different paths to further enhance data transfer reliability. In some embodiments, multiple levels of network coding may be provided within a transmitter in a multiple path scenario, with one level being applied across ail paths and another being applied within individual paths.

The document WO2005/0228812A1 discloses transmission techniques, which improve service continuity and reduce interruptions in delivery of content that can be caused by transitions that occur when the UE moves from one cell to the other, or when the delivery of content changes from a PTP connection to a PMT connection in the same serving cell, and vice-versa.

The document "ERICSSON: L2 transport of SRBs and relation to RLF handling; 3GPP DRAFT; R2-134221" discloses a duplication scheme: SRB is split over the MeNB and the SeNB link, and the PDCP PDU corresponding to the RRC message is duplicated, so that a copy is sent on both MeNB and SeNB link.

### Summary of the Invention

To solve the problem, the embodiment of the present invention is to provide a wireless multipath transmission method according to claim 1, a data transmitting device according to claim 12 and a data receiving device according to claim 15 to flexibly realize the multipath data transmission and efficiently use resources provided by each link to serve the user with data transmission. Further improvements and embodiments are provided in the dependent claims.

Also provided is a wireless multipath transmission method, which includes:
a data transmitting end encoding original data packets, herein a number of the encoded data packets is greater than a number of the original data packets;
the data transmitting end transmitting the encoded data packets to a data receiving terminal via different transmission links;
the data receiving end receiving data packets from different transmission links, and decoding the received data packets to obtain the original data packets.

Alternatively, before a step of the data transmitting end encoding a plurality of original data packets, the method further includes: the data transmitting end performing PDCP header compression on the original data packets.

Alternatively, before a step of the data transmitting end encoding a plurality of the original data packets, the method further includes: the data transmitting end performing PDCP layer encryption on the original data packets.

Alternatively, the original data packets are packet data convergence protocol (PDCP) service data units (SDUs) or protocol data units (PDUs).

Alternatively, the step of a data transmitting end encoding original data packets includes:
the data transmitting end encoding the original data packets in a PDCP layer; or,
the data transmitting end encoding the original data packets in a radio link control (RLC) layer.

Alternatively, the encoding is forward error correction (FEC) encoding.

Alternatively, the encoded data packets carry serial numbers; or carry indication information indicating whether to encode and the serial numbers;
the step of decoding the received data packets to obtain the original data packets includes: the data receiving end decoding according to the serial numbers carried in received data packet headers and contents of the data packets to restore the original data packets.

Alternatively, the encoded data packet further carries a process identifier representing an encoding transmission process;
the step of decoding the received data packets to obtain the original data packets includes: the data receiving end placing data packets with a same process identifier into a same buffer to decode.

Alternatively, after the step of the data receiving end decoding the received data packets to obtain the original data packets, the method further includes:
the data receiving end transmitting and feeding back reception success information to the data transmitting end; the data transmitting end terminating the transmission of remaining data in the encoded data packets and related to the original data packets obtained through the decoding, starting a new round of original data transmission and notifying the data receiving end that what the data transmitting end transmits are new data; or
the data receiving end feeding back serial numbers of successfully received, not successfully received and not received data packets to the data transmitting end; the data transmitting end determining whether the data receiving end has successfully obtained the original data packets based on the information fed back by the data receiving end, and if yes, terminating the transmission of remaining data in the encoded data packets and related to the original data packets obtained through the decoding, and starting a new round of original data transmission and notifying the data receiving end that what the data transmitting end transmits are new data.

Alternatively, the step of the data transmitting end transmitting the encoded data packets to a data receiving end via different transmission links includes:
the data transmitting end determining transmission links used to transmit the encoded data packets as well as a number of data packets transmitted in each transmission link according to a bit rate of the encoding, a link status, and/or a link bandwidth.

Alternatively, the different transmission links include: macro cell links and small cell links;
or, source cell links and target cell links;
or, long term evolution (LTE) links and non-LTE links, herein the non-LTE links include wireless local area network (WLAN) links and/or third-generation cellular communication (3G) links;
or, LTE licensed band links and LTE unlicensed band links;
or, LTE licensed band links and LTE shared band links;
or, frequency division duplex (FDD) links and time division duplex (TDD) links;
or, LTE low frequency links and LTE high frequency links;
or, fourth generation cellular communication (4G) links and fifth generation cellular communication (5G) links;
or, 3G links and wireless local area network (WLAN) links.

Alternatively, the transmission links are: downlink transmission links, uplink transmission links, relay transmission links, or device to device (D2D) communication links.

Alternatively, the transmission links are downlink transmission links;
the method further includes:
a network side where the data transmitting end is located notifying the data receiving end of configuration information of the encoding;
the data receiving end decoding the data according to the configuration information of the encoding; herein the configuration information of the encoding includes: the number of original data packets and the bit rate of the encoding.

Alternatively, the transmission link is an uplink transmission link;
the method further includes:
a network side where the data receiving end is located notifying the data transmitting end of configuration information of the encoding;
the data transmitting end encoding the data based on the configuration information of the encoding; herein, the configuration information of the encoding includes: the number of original data packets and the bit rate of the encoding.

Alternatively, the method further includes: the network side where the data transmitting end is located notifying the data receiving end to start and exit an encoded data transmission mode.

Also provided is a wireless multipath transmission system, which includes one or more data transmitting devices and a data receiving device; herein,
any one of the data transmitting devices is configured to: encode original data packets, transmit the encoded data packets to the data receiving end device via different transmission links; herein a number of the encoded data packets is greater than a number of original data packets;
the data receiving device is configured to: receive data packets from different transmission paths and decode the received data packets to obtain the original data packets.

Alternatively, the data transmitting device includes:
a macro eNB and a small eNB;
or, a source eNB and a target eNB;
or, an LTE eNB and a non-LTE eNB, herein the non-LTE eNBs may be a WLAN access point or 3G eNB;
or, a donor eNB and a relay node;
or, a D2D communication device.

Alternatively, the data transmitting device includes a preprocessing module and a distributing module; herein,
the preprocessing module is configured to: encode the original data packets and transmit the encoded data packets to the distributing module;
the distributing module is configured to: determine transmission links for transmitting the encoded data packets, and transmit the encoded data packets to the data receiving end device through the determined transmission links.

Alternatively, the preprocessing module is further configured to: perform a PDCP header compression on the original data packets.

Alternatively, the preprocessing module is further configured to: perform PDCP layer encryption on the original data packets.

Alternatively, the distributing module is configured to determine transmission links for transmitting the encoded data packets and transmit the encoded data packets to the data receiving end device through the determined transmission links in the following manner:
according to a bit rate of the encoding, and/or a link status, and/or a link bandwidth and other factors, determining the transmission links for transmitting the encoded data packets, and a number of data packets transmitted in each transmission link.

Alternatively, the data receiving device includes a merging module, herein the merging module is configured to: receive data packets from different transmission paths, and decode the received data packets to obtain the original data packets.

Alternatively, the merging module in the data receiving device is further configured to: transmit and feed back a reception success message to the distributing module in the data transmitting device;
accordingly, the distributing module in the data transmitting device is further configured to: terminate the transmission of remaining data in the encoded data packets and related to the original data packets obtained through the decoding.

Alternatively, the merging module in the data receiving device is further configured to: after receiving the data packets, feed back serial numbers of successfully received as well as not successfully received or not received data packets to the distributing module in the data transmitting device;
accordingly, the distributing module in the data transmitting device is further configured to: determine whether the data receiving end has successfully obtained the original data packets based on information fed back by the merging module in the data receiving device, and if yes, terminate the transmission of the remaining data in the encoded data packets and related to the original data packets obtained through the decoding.

Also provided is a wireless data transmitting device, which includes a preprocessing module and a distributing module; herein,
the preprocessing module is configured to: encode original data packets and output the encoded data packets to the distributing module;
the distributing module is configured to: determine transmission links used for transmitting the encoded data packets, and transmit the encoded data packets to the data receiving end device through the determined transmission links.

Alternatively, the preprocessing module is further configured to: perform PDCP header compression on the original data packets.

Alternatively, the preprocessing module is further configured to: perform PDCP layer encryption on the original data packets.

Alternatively, the distributing module is further configured to: after receiving a feedback of reception success from the data receiving device, terminate the transmission of remaining data in the encoded data packets and related to the original data packets obtained through the decoding.

Alternatively, the distributing module is further configured to: based on the reception success fed back by the data receiving device as well as serial numbers of successfully received as well as not successfully received or not received data packets, determine whether the data receiving end has successfully obtained the original data packets, and if yes, terminate the transmission of the remaining data in the encoded data packets and related to the original data packets obtained through the decoding.

Also provided is a wireless data receiving device, which includes a merging module, herein the merging module is configured to: receive data packets from different transmission links, and decode the received data packets to obtain original data packets.

Alternatively, the merging module is further configured to: feed back a reception success message to the data transmitting device.

Alternatively, the merging module in the data receiving device is further configured to: after decoding to obtain the original data packets, feed back serial numbers of successfully received, as well as not successfully received or not received data packets to the data transmitting device.

Also provided is a base station, which is provided with any one of the abovementioned data transmitting devices, and/or any one of the abovementioned data receiving devices.

Alternatively, the base station is further configured to: notify configuration information of encoding.

Also provided is a terminal, which is provided with any one of the abovementioned data transmitting devices, and/or any one of the abovementioned data receiving devices.

Alternatively, the terminal is further configured to: receive configuration information of encoding.

Compared with the related art, the technical solution of the present application includes: the data transmitting end encoding a plurality of original data packets, herein the number of encoded data packets is greater than the number of original data packets; the data transmitting end transmitting the encoded data packets through different transmission links to the data receiving end; the data receiving end receiving data packets from different transmission links and decoding them to obtain the original data packets. The embodiment of the present invention flexibly achieves the multipath data transmission by encoding and then distributing the original data packets (the number of encoded data packets is greater than the number of the original data packets), and, when distributing the encoded data packets, the configuration information of the encoding is further taken into account, thus efficiently using the resources provided by each link to serve the user with data transmission and reducing the transmission delay.

Other features and advantages of the present invention will be set forth in the following description, and, will become apparent partially from the description, or be learned by the practice of the present invention. The objectives and other advantages of the present invention can be achieved and acquired through the specification, the claims, and the structures particularly pointed out in the accompanying drawings.

### Brief Description of the Drawings

Herein, the described accompanying drawings are used to provide a further understanding of the present invention and constitute a part of the present application, exemplary embodiments of the present invention and their description are used to explain the present invention and do not constitute an improper limit on the present invention. In the accompanying drawings:
FIG. 1 is a schematic diagram of the heterogeneous network of a multimode evolved node B in the related art;
FIG. 2 is a schematic diagram of a relevant implementation of the multipath transmission method;
FIG. 3 is a flow chart of the wireless multipath transmission method in accordance with an embodiment of the present invention;
FIG. 4 is a schematic diagram of a wireless multipath transmission method in accordance with a first embodiment of the present invention;
FIG. 5 is a schematic diagram of the wireless multipath transmission method in accordance with a second embodiment of the present invention;
FIG. 6 is a schematic diagram of the wireless multipath transmission method in accordance with a third embodiment of the present invention;
FIG. 7 is a schematic diagram of the wireless multipath transmission method in accordance with a fourth embodiment of the present invention;
FIG. 8 is a schematic diagram of the composition framework of a wireless multipath transmission system in accordance with an embodiment of the present invention.

### Preferred Embodiments of the Invention

Hereinafter, in conjunction with the accompanying drawings, embodiments of the present invention will be described in detail. It should be noted that, in the case of no conflict, embodiments and features in the embodiments of the present application may be arbitrarily combined with each other.

FIG. 3 is a flow chart of the wireless multipath transmission method in accordance with the embodiment of the present invention, as shown in FIG. 3, it includes the following steps:
in step 300, the data transmitting end encodes a plurality of original data packets, herein the number of encoded data packets is greater than the number of the original data packets.

In this step, the original data packets may be Packet Data Convergence Protocol (PDCP) service data units (SDUs) or Protocol Data Units (PDUs).

Assume that the data transmitting end encodes K PDCP data packets, and generates N air interface data packets; herein in the N encoded data packets, the first K data packets still are the K original PDCP data packets before the encoding, the next (N-K) data packets are redundant data packets. Herein, K and N are positive integers greater than 1, and N>K. The ratio of the number of the original data packets to the number of the encoded data packets (i.e., K/N) is called as a bit rate of the encoding. The bit rate of the encoding can be determined or adjusted according to the condition of links involved in the transmission and/or the link bandwidths. For example, under the condition that the statuses of the transmission links are good and stable (for example, in the case of dual-link transmissions of macro base station and small base station), the bit rate of the encoding can be reduced, and the data of redundant data packets can be reduced, so as to reduce the encoding complexity and the transmission overhead; for another example, if the data transmitting end considers that a transmission link is relatively volatile, and there may even be the possibility that the transmission link is disconnected (for example, in the scenario of handover), then it may appropriately increase the bit rate and the number of redundant data packets to be more effectively against unpredictable factors in the transmission, thus ensuring that the data receiving end receives enough data packets to restore the original data packets in the shortest time; for still another example, the link A is relatively stable but can only provide limited bandwidth (such as the LTE macro eNB link), while the link B is less stable, but can provides a large maximum bandwidth (such as WLAN link, or LTE unlicensed band link, or relay link), a relatively large bit rate and a relatively large number of encoded data packets may be used, during the distribution, a relatively large number of original data packets are distributed to the link A, and a relatively large number of redundant data packets are distributed to the link B, therefore, if the link B becomes poor, the original data packets received by the receiving end through the link A can be very effective to obtain the required data, while if the link B is good, by receiving a small number of the original data packets via the link A and a large number of redundant data packets via the link B, the receiving end can also receive enough data packets in the shortest time to decode and restore all the original data packets.

In this step, the data transmitting end may encode the original data packets in the PDCP layer; or, encode the original data packets in the radio link control (RLC) layer.

Before this step, it further includes: the data transmitting end performing PDCP header compression on the original data packets; or, the data transmitting end performing PDCP layer encryption on the original data packets.

The encoding in this step may be forward error correction (FEC) encoding.

In this step, the encoded data header carries a serial number; or carries indication information indicating whether to encode and the serial number;
alternatively, the encoded data packet header further carries a process identifier representing the encoding transmission process so as to support the independent encoding and decoding operations of data packets in different process, thus supporting that the transmission of the next process already starts when the previous process has not yet ended, that is, supporting simultaneous parallel transmission in multiple processes.

In step 301, the data transmitting end transmits the encoded data packets to the data receiving end through different transmission links.

In this step, the data transmitting end can determine the encoded data packets transmitted through different transmission links based on the bit rate of the encoding, and/or the link status, and/or the link bandwidth and other factors, that is, determine using which transmission links to transmit the data packets, and the number of data packets transmitted in each transmission link (or the proportion of data packets transmitted in each link). For example, based on the statuses of different links, it is to determine the links actually participating in the data packet transmission (for example, it is only to choose 2 or 3 links whose link channel quality is good and/or load is low to participate in the data packet transmission), and determine to transmit how many data packets in which transmission links, and transmit which data packets. For example, it is to adjust the data distribution strategies of different links according to the statuses of the different links, which is not limited here and is not intended to limit the protection scope of the present invention, as long as it meets the condition that the data receiving end can always restore the original data packets when the data transmission in part of the links is abnormal (such as packet loss, large packet delay, even broken links), there are a lot of concrete implementation strategies, which can be readily known by those skilled in the art on the basis of the method provided in the embodiments of the present invention. For example, it is to distribute the data packets based on the ratio of the bandwidths provided by respective links to the user: for example, the bandwidth provided by the link A can be twice as the bandwidth provided by the link B, then the distribution strategy may be that, at each time of distributing two data packets to the link A, it is to distribute one data packet to the link B, and so on; when the bandwidth provided by the link B increases, for example, because the channel of the link B continues to become better, the distribution strategy can be adjusted and more data packets are distributed to the link B. For another example, considering that directly obtaining the original data packets is simpler and more efficient than restoring the original data packets from the redundant data packets, more original data packets can be assigned to links whose link status is better or more stable, while more redundant data packets can be assigned to links whose link status is bad or unstable; if both links are unstable or it is difficult to predict whether they are stable, such as in the case of handover, the distribution strategy can be that each link is assigned with some original data packets and some redundant data packets.

In this step, different transmission links may include: macro cell links and small cell links;
or, source cell links and target cell links;
or, LTE links and non-LTE links, herein, the non-LTE links includes wireless local area network (WLAN) links and/or third-generation cellular communication (3G) links;
or, LTE licensed band links and LTE unlicensed band links; or, LTE licensed band links and LTE shared spectrum links; or, frequency division duplex (FDD) links and time division duplex (TDD) links; or, LTE low frequency links and LTE high frequency links; or, fourth generation cellular communication (4G) links and fifth generation cellular communication (5G) links; and the method in the embodiment of the present invention can be used even in the scenario of the 3G and WLAN combined transmission.

In this step, the transmission link can be a downlink transmission link; at this time, the data transmitting end is the network side, and the data receiving end is the UE;
or, the transmission link may be an uplink transmission link, at this time, the data transmitting end is the UE, and the data receiving end is the network side;
or, the transmission link may be a relay transmission link, at this time, the data transmitting end and the data receiving end are an evolved node B and a relay node, or a relay node and a relay node;
or, the transmission link may be a device-to-device (D2D) communications link, at this time, both the data transmitting end and the data receiving end are UEs.

In this step, when the transmission link is a downlink transmission link, it further includes: the eNB located at the network side notifying the UE of the configuration information of the encoding, the UE decoding the data based on the configuration information of the encoding; herein the configuration information of the encoding may include but is not limited to: the number of data packets used for the encoding, the bit rate of the encoding, etc.

When the transmission link is an uplink transmission link, it further includes: the eNB of the network side where the data receiving end is located notifying the UE of the configuration information of the encoding, and the UE of the data transmitting end encoding the data based on the configuration information of the encoding;

The embodiment of the present invention further includes: the network side notifying the UE to start or exit the encoded data transmission mode.

In step 302, the data receiving end receives data packets from different transmission links, and decodes them to obtain the original data packets.

In this step, the data receiving end decodes the data based on the serial numbers carried in the data packet headers and contents of the data packets, and restores them into the original data packets;
alternatively, the receiving end decodes based on the process identifier, specifically, the receiving end places data packets with the same process identifier into the same buffer and decodes them.

After the data receiving end successfully obtains the original data packets, the method in accordance with the embodiment of the present invention further includes: the data receiving end feeding back a reception success message to the data transmitting end, and the data transmitting end terminating the transmission of remaining data in the encoded data packets and related to the original data packets obtained through the decoding, starting a new round of original data transmission, and indicating the receiving end that what are transmitted are new data.

Herein, if the original K data packets are encoded to generate N data packets, because the number of encoded data packets is greater than the number of the original data packets, that is, N>K, it is possible that the data transmitting end transmits data packets whose number is less than N, if M encoded data packets are transmitted (K ≤ M <N), the data receiving end successfully decodes and obtains the K original data packets through the M data packets, in this case, the data transmitting end terminates the transmission of the remaining (N-M) encoded data packets.

In addition, the new data indication can be implemented or indicated through the process identifier, taking a 3-bit process identifier for example, if currently there are two process identifiers of transmission, saying including 010 and 011, when the data receiving end feeds back that the decoding of the data whose process identifier is 010 has been successful completed, the data transmitting end starts a new round of data transmission and sets the process identifier to be 100; or it can be represented by a field other than the process ID, for example, it can be represented with 1 to 2 bits, when transmitting a new round of data, this field is incremented, taking 1 bit for example, when transmitting a new round of data, the field increment is equivalent to the field flip, if the field is 0 in the last round, then this field is 1 in the new round of transmission, and if the field is 1 in the last round, this field is 0 in the new round of transmission, taking two bits for example, if the field is 00 in the last round, the field is set to 01 in the new round of transmission, and the field is set to 10 in the next round of transmission, and then 11, and 00 thereafter. Therefore, if the receiving end has successfully decoded the data packets whose field is 00, the data receiving end receiving data whose field is set to 01 indicates that a new round of data transmission starts, the data receiving end should clear the buffer after successfully decoding the data packets whose field is 00, or clear the buffer of the data whose field is 00 and start to buffer a new round of data upon receiving a new round of data whose field is 01; or,
after the data receiving end receives the data packets, the method according to the embodiment of the present invention further includes: the data receiving end feeds back serial numbers of the successfully received as well as not successfully received or not received data packets to the data transmitting end; the data transmitting end determines whether the data receiving side has successfully obtained the original data packets based on the fed back information, if it is determined that the data receiving side has successfully obtained the original data packets, it terminates the transmission of remaining data in the encoded data packets and related to the original data packets obtained through the decoding, and starts a new round of original data transmission, and indicates to the receiving end that what are transmitted are the new data; otherwise, the data transmitting end continues to transmit the current data.

The combination of supporting multi-process transmission and the abovementioned feedback effectively improves the transmission efficiency and reduces the transmission overhead. For example, when the data transmitting end transmits the data of the process 01, it first transmits enough encoded data packets for the receiving end to decode and restore the original data packets (such as PDCP or RLC PDU), and because the transmission in the bottom layer takes some time, the feedback of the data receiving end takes some time too, in this case, if the data transmitting end continues to transmit the encoded data packets of the process 01, the data that continue to be transmitted may be redundant or unnecessary to be transmitted, if nothing is transmitted while just waiting for the transmission of the bottom layer and the feedback of the data receiving end, the transmission opportunity in this time period may be wasted, thus reducing the link utilization and the throughput, thus, a better approach is to transmit data of a new process (process 10) in this time period, and till the feedback of the data receiving end is received or a transmission report of the bottom layer link is received or the link state is found abnormal, the process 01 will be processed, for example, if the data receiving end feeds back that the data packets of the process 01 are successfully decoded, the transmitting end empties subsequent data packets of the process 01, if a transmission failure report of the bottom-layer link is received or the status of the transmission link is abnormal, it continues to transmit more encoded data packets of the process 01 to provide more encoded data packets for the receiving end to decode. This not only makes full use of the link bandwidth but also maintains a small transmission overhead.

In the method according to the embodiment of the present invention, the multipath data transmission is flexibly achieved by encoding and then distributing the original data packets (the number of encoded data packets is greater than the number of original data packets), and, when distributing the encoded data packets, the configuration information of the encoding is further considered, which efficiently uses the resources provided by each link to serve the user with data transmission and reduces the transmission delay.

In the following, the method in accordance with the embodiment the present invention will be described in detail.

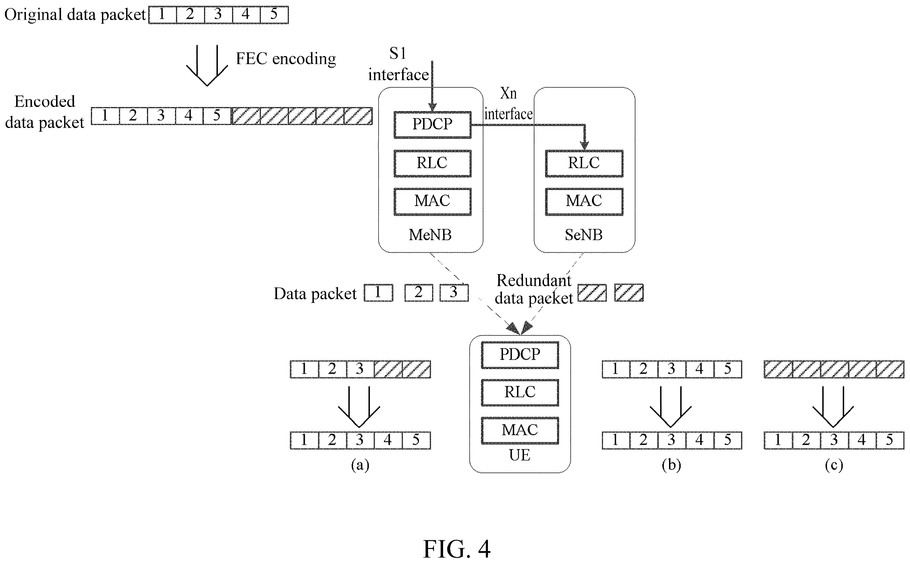

FIG. 4 is a schematic diagram of the wireless multipath transmission method in accordance with the first embodiment of the present invention, as shown in FIG. 4, the first embodiment takes the downlink data transmission in a dual connectivity architecture as an example, in FIG. 4, the original data packets are distinguished with different serial numbers such as 1, 2, 3, 4 and 5, and the redundant data packets are represented with small shaded squares.

In the first embodiment, assuming that the MeNB receives user data through the S1-U interface and performs the FEC encoding before the distribution in the Layer 2, in the first embodiment, assuming that the 1/2 bit rate is used to input 5 non-encoded data packets and output 10 data packets. The encoded data packet carries a packet header, and the packet header carries the serial number of the data packet, which is used to decode to restore the data packet in order; or, the header carries indication information indicating whether to encode the data packet and the serial number of the data packet.

As shown in FIG. 4, in the 10 encoded data packets, some data packets can be forwarded to the SeNB, thus, the UE can receive the data packets via two paths, namely the MeNB link and the SeNB link. Because the channel conditions of the two links are different and the scheduling strategies of the MeNB/SeNB are different, the orders by which the data packets of the two links arrive at the UE as well as the number of data packets that arrive at each link may be different, however, as long as not all links are disconnected, the UE can always receive enough data packets (the number of which may be the same number of the original data packets, or greater than the number of the original data packets), then, the UE decodes the received data packets and restores them back into the original data packets in accordance with the serial numbers.

Assuming that the two links work well, as shown in FIG. 4, herein, taking that the UE has three data packets from the MeNB and two data packets from the SeNB for example, as shown in FIG. 4 (a), the UE decodes these data packets to restore five original data packets; or, assuming that the transmission of the SeNB link fails, for example, the link is broken, the five data packets received by the UE are all from the MeNB, as shown in FIG. 4(b), and the five data packets can be used to restore the five original data packets; or, assuming that the transmission of the MeNB link fails, five redundant packets received by the UE are all from the SeNB, as shown in FIG. 4(c), the UE decodes the redundant data packets to restore the five original data packets.

After the UE decodes successfully, the UE feeds back to the data transmitting end (MeNB and/or SeNB) to notify the data transmitting end to terminate the transmission of remaining data in the encoded data packets and related to the original data packets obtained through the decoding. Therefore, the data transmitting end can continue the subsequent transmission.

Because it may need to go through a period of delay for the MeNB encoding and distributing these data packets to the SeNB, the embodiment of the present invention further includes: carrying process identifier information (process ID) representing the data transmission process in the header of the encoded data packet. The UE simultaneously receives data packets of N (N>=2) encoded data transmission processes and decodes the data packets of each process based on the process identifier, that is, the method in accordance with the embodiment of the present invention supports a plurality of encoded data transmission processes. Therefore, one or more encoded data packet groups can be transmitted simultaneously at the air interface to avoid the loss of the air interface transmission efficiency.

In the first embodiment, the encoding/decoding can be performed in the PDCP layer, specifically including:
the data transmitting end performs the FEC packet encoding before adding the PDCP packet header, for example, it may perform the packet encoding after performing the PDCP layer header compression, or perform the packet encoding after performing the encryption. Preferably, it performs the packet encoding after performing the encryption, which does not additionally increase the number of encrypted data packets and reduces the computation complexity;
a header is added after the encoding, herein the header carries the serial number of the packet, or the serial number of the data packet and an indication indicating whether to encode, if multiple processes are supported, it may further carry a process ID. For example, the 12bit SN in the PDCP header is used to represent the serial number of the data packet, and reserved bits in the PDCP header are used to represent the process ID (using 1 or 2 or 3 bits in 3-bit reserved bits to respectively represent 2 or 4 or 8 processes); or, one bit in the reserved bits is used to represent the indication information indicating whether to encode, two bits to represent the process ID, therefore there is no need to add additional header overhead. Again, a new field is used to represent the serial number of the encoded packet (such as 4 to 6 bits), 1 bit indicates an indication indicating whether to encode (or whether it is an original/redundant data packet), 2 to 3 bits indicates the process ID;
when the data receiving end decodes the PDCP header, it may perform the FEC decoding based on the carried information. In the case that the data transmitting end reuses the PDCP related header, the data receiving end can feed back serial numbers of the received/not received data packets to the data transmitting end by the PDCP control PDU, such as a PDCP status report, after the data transmitting end receives the status report, it can judge whether the data receiving end have successfully decoded out the original data packets, if it is judged that the original data packets have been successfully decoded out, it is to terminate the transmission of data packets related to the original data packets in the process (for example, it is no longer deliver the PDCP PDUs related to these original data packets to the RLC, it may also indicate the RLC layer to discard the RLC SDUs related to these original data packets); if it is judged that the original data packets have not been successfully decoded, then it is to continue the transmission of the data packets related to these original data packets in the process (it should be noted that it may need to further judge, for the UE, which data packets are needed to decode the original data packet, so as to control the number of data packets to be transmitted continuously and even which data packets to be transmitted continuously).

When the data transmitting end uses a new field to indicate the serial number of the encoded data packet, the data receiving end can feed back a newly-defined status report including the serial number and the process ID of the encoded data packet, so as to achieve the feedback function similar to the abovementioned PDCP status report. Besides the feedback way of using the abovementioned status report to implicitly indicate whether the decoding is successful, an explicit method can also be used, for example, one bit+ process ID is used to feed back to the data transmitting end that the decoding is successful (or a new round of data packet transmission of the process can be started), therefore, the data transmitting end can stop the transmission of data packets related to the original data packets of the process. The data distribution may be in the RLC layer or in the PDCP layer.

In the first embodiment, the encoding/decoding can be performed in the RLC layer, preferably, the data packets are RLC SDUs (i.e., PDCP PDUs), therefore the efficiency is high, and the data are distributed in the RLC layer. At the same time, the status reporting mechanism of the RLC layer can be used to achieve a function similar to the PDCP layer status reporting mechanism. In this way, it also needs to add a new field or a sub-header (say, 4∼6 bits) to indicate the serial number of the encoded data packet, 1 bit indicates the indication indicating whether to encode (or whether it is an original/redundant data packet), and 2~3 bits indicates the process ID. When the data receiving end decodes the PDCP header, it can perform the FEC decoding based on the information.

The first embodiment takes the downlink transmission as an example, and in specific implementations, it can also be used in a variety of transmissions, including downlink transmission, uplink transmission, relay transmission, and D2D transmission. In these transmissions, the configuration of the encoding and decoding can be performed by the network side. For example, in the downlink transmission, the network side notifies the UE of the configuration information of the encoding, and the UE decodes the data based on the configuration information of the encoding; in the uplink transmission, the network side notifies the UE of the configuration information of the encoding, and the UE encodes the data based on the configuration information of the encoding; in the D2D transmission, the network side notifies the UE peer in the communication of the configuration information of the encoding/decoding (which can also be configured by the UE itself, for example, in the case of the absence of the network coverage).

In the first embodiment, the network side may also adjust the configuration of the encoding based on the statuses of different transmission links, for example, in the case that the transmission conditions of two transmission links are relatively stable, the network side reduces the bit rate, or in the case that the transmission conditions are unstable, the network side increases the bit rate. The related signaling can be transmitted via the RRC message or the L2 Control element.

In the first embodiment, the data transmitting end can also adjust the data distribution strategies of different transmission links based on the statuses of the different transmission links: for example, when the MeNB link is relatively better, more data packets are transmitted through the MeNB; or when the SeNB link is relatively better, more data packets are transmitted through the SeNB.

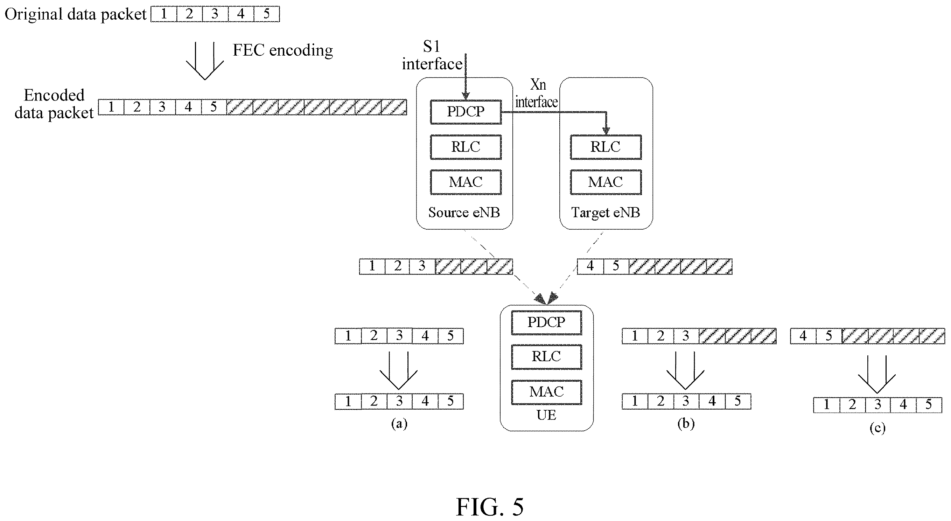

FIG. 5 is a schematic diagram of the wireless multipath transmission method in accordance with the second embodiment of the present invention, as shown in FIG. 5, the second embodiment takes the downlink data transmission in a handover process as an example, in FIG. 5, the original data packets are distinguished with different serial numbers such as 1,2, 3, 4 and 5, and the redundant data packets are represented with small shaded squares.

As shown in FIG. 5, assuming that the source eNB receives user data through the S1-U interface, and performs the FEC encoding before the distribution in the Layer 2, assuming that the 5/12 bit rate is used to input 5 non-encoded data packets and output 12 data packets. Each encoded data packet carries a packet header, and the packet header carries a serial number of the data packet that is used to decode to restore the data packet in order; or, the header carries indication information indicating whether to encode the data packet and the serial number of the data packet.

As shown in FIG. 5, in the 12 encoded data packets, some data packets can be forwarded to the target eNB, thus the UE can receive data packets via two paths, namely the source eNB link and the target eNB link. Because the backhaul delays and the channel conditions of the two links are different and the scheduling strategies of the source/target eNB are different, the orders by which the data packets of the two links arrive at the UE as well as the number of data packets that arrive at each link may be different, however, as long as not all links are disconnected, the UE can always receive enough data packets (the number of which may be the same number of the original data packets, or greater than the number of the original data packets), then, the UE decodes the received data packets and restores them back into the original data packets based on the serial numbers.

Assuming that the two links work well, as shown in FIG. 5(a), assuming that the UE has three data packets from the source eNB and 2 data packets from the target eNB, the UE decodes these data packets to restore five original data packets; or, assuming that the target link fails, for example, the link is broken, as shown in FIG. 5(b), the six data packets which are received by the UE and can be used to restore the five original data packets are all from the source eNB; or, assuming that the source link fails and the six (encoded) data packets received by the UE are all from the target link, as shown in FIG. 5(c), the UE decodes the data packets to restore the five original data packets.

Similarly, after the UE decodes successfully, the UE feeds back to the data transmitting end (source eNB and/or target eNB) to notify the data transmitting end to terminate the transmission of remaining data in the encoded data packets and related to the original data packets obtained through the decoding.

Similarly, the header of the encoded data packet carries a process ID used to represent the data transmission process, and the specific implementation is omitted here.

Similarly, in the second embodiment, the encoding/decoding can be performed in the PDCP layer, and the encoding/decoding may also be performed in the RLC layer, and the specific implementation is omitted here.

Similarly, in the second embodiment, the network side can also adjust the configuration of the encoding based on the statuses of different transmission links, and the specific implementation is omitted here.

Similarly, the data transmitting end may also adjust the data distribution strategies of different transmission links based on the statuses of different transmission links, and the specific implementation is omitted here.

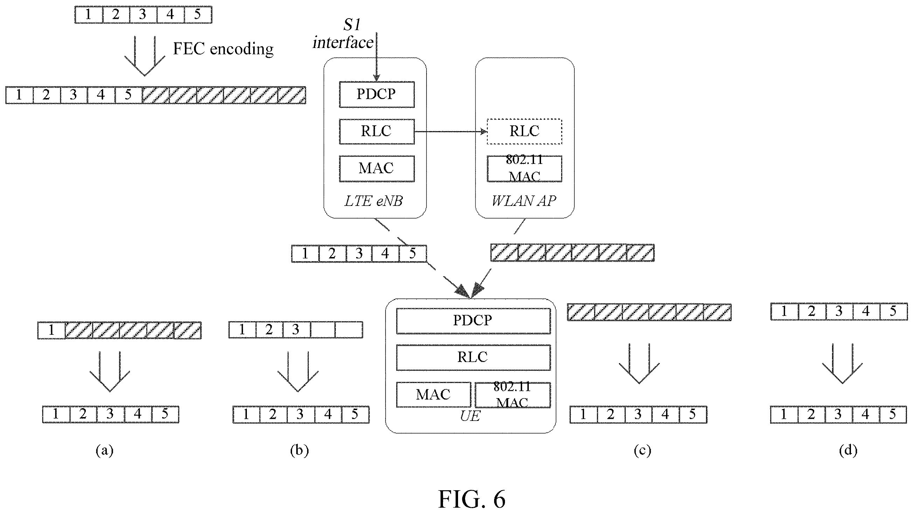

FIG. 6 is a schematic diagram of the wireless multipath transmission method in accordance with the third embodiment of the present invention, as shown in FIG. 6, the third embodiment takes the downlink data transmission in a LTE and WLAN combined transmission architecture as an example, in FIG. 6, the original data packets are distinguished with different serial numbers such as 1, 2, 3, 4 and 5, and the redundant data packets are represented with small shaded squares.

In the third embodiment, the encoding/decoding is performed in the RLC layer, assuming that the LTE eNB receives user data through the S1-U interface and performs the FEC encoding before the distribution in the Layer 2, and in the third embodiment, assuming that the 5/11 bit rate is used to input 5 non-encoded data packets and output 11 data packets. Each encoded data packet carries a packet header, and the packet header carries a serial number of the data packet, which is used to decode to restore the data packet in order; or, the header carries indication information indicating whether to encode the data packet and the serial number of the data packet.

As shown in FIG. 6, in the 11 encoded data packets, some data packets can be forwarded to the WLAN AP, thus the UE can receive data packets via two paths, namely the LTE link and the WLAN link. Because the backhaul delays and the channel conditions of the two links are different and the scheduling/resource competition strategies are different, the orders by which the data packets of the two links arrive at the UE as well as the number of data packets that arrive at each link may be different, however, as long as not all links are disconnected, the UE can always receive enough data packets (the number of which may be the same number of the original data packets, or greater than the number of the original data packets), then, the UE decodes the received data packets and restores them back into the original data packets based on the serial numbers.

Assuming that the two links work well, as shown in FIG. 6(a), for example, the UE may have one data packet from the LTE eNB and 5 data packets from the WLAN (if the WLAN link is relatively better), or as shown in FIG. 6(b), the UE may have 3 data packets from the LTE and 2 data packets from the WLAN (if the LTE link is relatively better); the UE decodes these data packets to restore the five original data packets; or, assuming that the LTE link fails, for example, the link is broken, as shown in FIG. 6(c), assuming that the UE receives 6 data packets from the WLAN link and the six data packets can be used to restore the five original data packets; assuming that the WLAN link fails (or there are a lot of WLAN air interface collusions), as shown in FIG. 6(d), assuming that the 5 data packets received by the UE are all from the LTE, the UE decodes the data packets to restore the five original data packets.

Similarly, after the UE decodes successfully, the UE feeds back to the data transmitting end (LTE eNB and/or WLAN AP) to notify the data transmitting end to terminate the transmission of remaining data in the encoded data packets and related to the original data packets obtained through the decoding.

Similarly, the header of the encoded data packet carries a process ID representing the data transmission process, and the specific implementation is omitted here.

Similarly, in the third embodiment, the encoding/decoding may be performed in the RLC layer or the PDCP layer, and the specific implementation is omitted here.

Similarly, in the third embodiment, the network side may also adjust the configuration of the encoding based on the statuses of different transmission links. The specific implementation is omitted here.

Similarly, the data transmitting end may also adjust the data distribution strategies of different transmission links according to the statuses of the different transmission links. The specific implementation is omitted here.

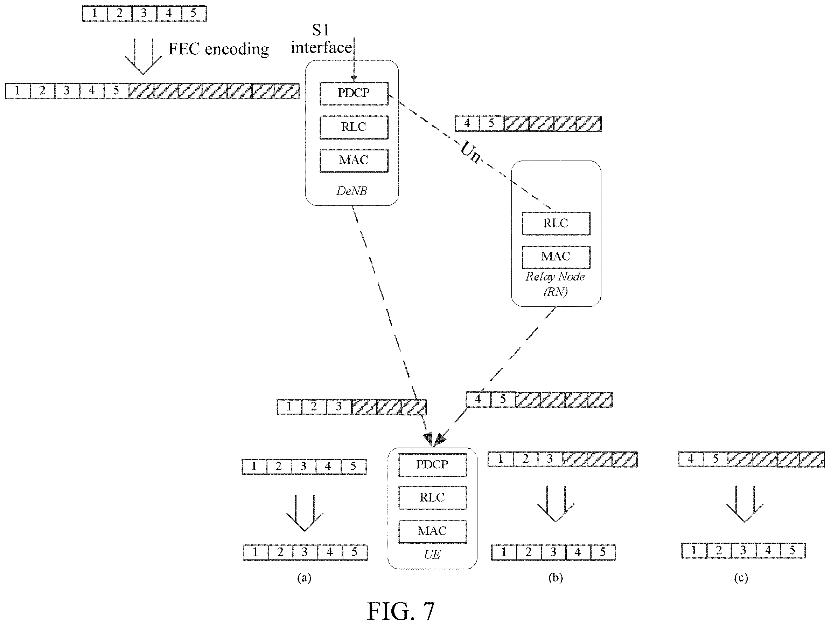

FIG. 7 is a schematic diagram of the wireless multipath transmission method in accordance with the fourth embodiment of the present invention, as shown in FIG. 7, the fourth embodiment takes the downlink data transmission in the macro eNB and the relay dual connectivity architecture as an example, in FIG. 7, the original data packets are distinguished with different serial numbers such as 1, 2, 3, 4 and 5, and the redundant data packets are represented with small shaded squares.

As shown in FIG. 7, assume that the donor eNB (DeNB) receives user data through the S1-U interface and performs the FEC encoding before the distribution in the Layer 2, assume that the 5/11 bit rate is used to input 5 non-encoded data packets and output 12 data packets. The encoded data packet carries a packet header, and the packet header carries a serial number of the data packet that is used to decode to restore the data packet in order; or, the header carries indication information indicating whether to encode the data packet and the serial number of the data packet.

As shown in FIG. 7, in the 12 encoded data packets, some data packets can be forwarded to the relay node (RN), thus the UE can receive data packets via two paths, namely the DeNB link and the relay node link. Because the delays and the channel conditions of the two links are different and the scheduling strategies are different, the orders by which the data packets of the two links arrive at the UE as well as the number of data packets that arrive at each link may be different, however, as long as not all links are disconnected, the UE can always receive enough data packets (the number of which may be the same number of the original data packets, or greater than the number of the original data packets), then, the UE decodes the received data packets and restores them back into the original data packets based on the serial numbers.

Assuming that the two links work well, as shown in FIG. 7(a), assuming that the UE has three data packets from the DeNB and two data packets from the relay node, the UE decodes these data packets to restore the five original data packets; or, assuming that the link through the relay node fails, for example, the link is broken, as shown in FIG. 7(b), assuming that the six data packets received by the UE are all from the DeNB and the six data packets can be used to restore the five original data packets; or, assuming that the DeNB link fails, and the 6 data packets received by the UE are all from the relay node, the UE decodes the data packets to restore the five original data packets.

Similarly, after the UE decodes successfully, the UE feeds back to the data transmitting end (DeNB and/or RN) to notify the data transmitting end to terminate the transmission of remaining data in the encoded data packets and related to the original data packets obtained through the decoding.

Similarly, the header of the encoded data packet carries a process ID representing the data transmission process, and the specific implementation is omitted here.

Similarly, in the fourth embodiment, the encoding/decoding can be performed in the RLC layer or the PDCP layer, and the specific implementation is omitted here.

Similarly, in the fourth embodiment, the network side can also adjust the configuration of the encoding based on the statuses of different transmission links. The specific implementation is omitted here.

Similarly, the data transmitting end may also adjust the data distribution strategies of the different transmission links based on the statuses of the different transmission links. The specific implementation is omitted here.

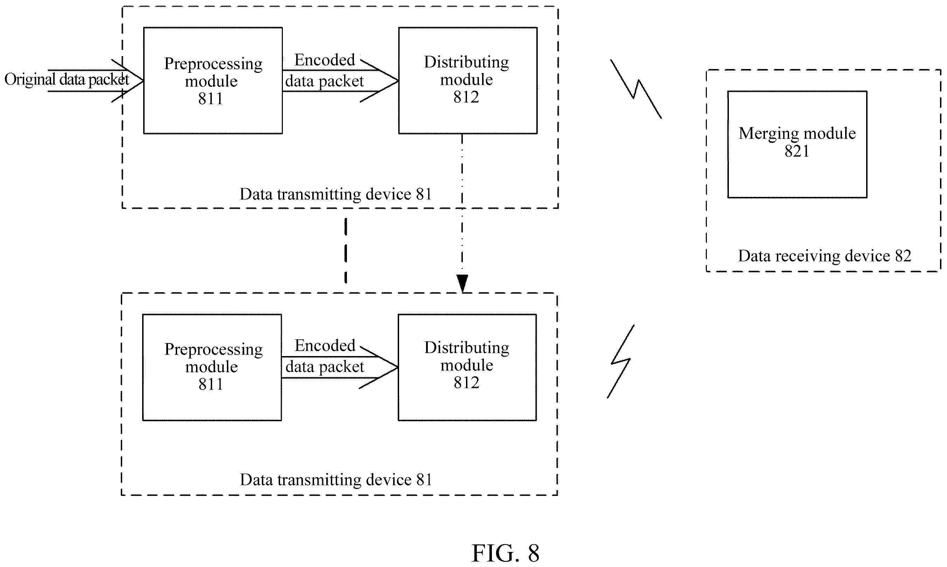

FIG. 8 is a schematic diagram of the component framework of a wireless multipath transmission system in accordance with an embodiment of the present invention, as shown in FIG. 8, it includes one or more data transmitting devices 81 and a data receiving device 82; herein,
one of the data transmitting devices 81 is configured to: encode a plurality of original data packets, transmit the encoded data packets to the data receiving end device via different transmission links of itself as well as other one or more data transmitting devices; herein the number of encoded data packets is greater than the number of original data packets;
the data receiving device 82 is configured to: receive data packets from different transmission paths, and decode them to obtain the original data packets.

For example, the data transmitting device 81 includes a macro eNB and a small eNB; or, a source eNB and a target eNB; or, an LTE eNB and a non-LTE eNB, herein the non-LTE eNB may be a WLAN access point or a 3G eNB; or, a donor eNB and a relay node; or, a D2D communication device. It should be noted that, the data receiving device that encodes a plurality of original data packets can be any one of the abovementioned devices, and the eNB of other transmission links can be one or more of the abovementioned devices, or one or more of the other corresponding types.

Herein, the data transmitting device 81 includes a preprocessing module 811 and a distributing module 812; herein,
the preprocessing module 811 is configured to: encode a plurality of original data packets and output the encoded data packets to the distributing module;
the distributing module 812 is configured to: determine transmission links for transmitting the encoded data packets, and transmitting the encoded data packets to the data receiving end device through the determined transmission links.

Alternatively, the preprocessing module 811 is further configured to perform PDCP header compression on the original data packets; and further used to perform PDCP layer encryption on the original data packets.

Alternatively, the distributing module 812 is configured to determine the transmission links for transmitting the encoded data packets in the following manner: determining the transmission links for transmitting the encoded data packets and the number of data packets transmitted in each transmission link based on the bit rate of the encoding, and/or the link status, and/or the link bandwidth and other factors, or determining the transmission links of itself and other one or more data transmitting devices, and transmitting the encoded data packets to the data receiving end device through the determined transmission links.

The data receiving device 82 includes at least a merging module 821, which is configured to: receive data packets from different transmission paths, and decode the received data packets to obtain the original data packets.

Alternatively, the merging module 821 in the data receiving device 82 is further configured to: transmit and feed back a reception success message to the distributing module 812 in the data transmitting device; accordingly, the distributing module 812 in the data transmitting device 81 is further configured to: terminate the transmission of remaining data in the encoded data packets and related to the original data packets obtained through the decoding.

Alternatively, the merging module 821 in the data receiving device is further configured to: after receiving the data packets, feed back the serial numbers of the successfully received as well as not successfully received or not received data packets to the distributing module 812 in the data transmitting device 81; accordingly, the distributing module 812 in the data transmitting device 81 is further configured to: determine whether the data receiving end has successfully obtained the original data packets based on the fed back information, and if yes, terminate the transmission of the remaining data in the encoded data packets and related to the original data packets obtained through the decoding.

The embodiment of the present further provides an evolved node B, which is provided with the data transmitting device 81 and/or the data receiving device 82 provided in the embodiment of the present invention. The eNB in the embodiment of the present invention is further used to notify the configuration information of the encoding.

The embodiment of the present further provides a terminal, which is provided with the data transmitting device 81 and/or the data receiving device 82 in the embodiment of the present invention. The terminal in the embodiment of the present invention is further used to receive the configuration information of the encoding.

The above description is only preferred embodiments of the present invention and is not intended to limit the protection scope of the present invention. Any modifications, equivalent substitutions and improvements made within the essence and principle of the present invention should be included within the protection scope of the appended claims.

### Industrial Applicability

The technical solution of the present application includes: the data transmitting end encoding a number of original data packets, herein the number of encoded data packets is greater than the number of original data packets; the data transmitting end transmitting the encoded data packets through different transmission links to the data receiving end; the data receiving end receiving data packets from different transmission links and decoding them to obtain the original data packets. The embodiment of the present invention flexibly achieves the multipath data transmission by encoding and then distributing the original data packets (the number of encoded data packets is larger than the number of the original data packets), and, when distributing the encoded data packets, the configuration information of the encoding is further taken into account, thus efficiently using the resources provided by each link to serve the user with data transmission and reducing the transmission delay. Therefore, the present invention has very strong industrial applicability.

## Claims

1. A wireless multipath transmission method, comprising:
a data transmitting end encoding original data packets into N data packets, wherein K data packets are original data packets and (N-K) data packets are redundant data packets, K and N are positive integers greater than 1, and N>K (300);
the data transmitting end transmitting the encoded data packets to a data receiving terminal via different transmission links (301), whereby more original data packets are assigned to links whose link status is better or more stable, while more redundant data packets are assigned to links whose link status is bad or unstable;
the data receiving end receiving data packets from different transmission links, and decoding the received data packets to obtain the original data packets (302),
and wherein, the original data packets are packet data convergence protocol, PDCP, service data units, SDUs, or protocol data units, PDUs;
the step of a data transmitting end encoding original data packets comprises:
the data transmitting end encoding the original data packets in a PDCP layer; or,
the data transmitting end encoding the original data packets in a radio link control, RLC, layer.

2. The wireless multipath transmission method of claim 1, wherein, before a step of the data transmitting end encoding a plurality of original data packets, the method further comprises: the data transmitting end performing packet data convergence protocol, PDCP, header compression on the original data packets,
or,
wherein, before a step of the data transmitting end encoding a plurality of original data packets, the method further comprises: the data transmitting end performing PDCP layer encryption on the original data packets.

3. The wireless multipath transmission method of claim 1, wherein,
said encoding is forward error correction, FEC, encoding.

4. The wireless multipath transmission method of claim 1, wherein, the encoded data packets carry serial numbers; or the encoded data packets carry serial numbers and indication information indicating whether to encode;
the step of decoding the received data packets to obtain the original data packets comprises: the data receiving end decoding according to the serial numbers carried in received data packet headers and contents of the data packets to restore the original data packets.

5. The wireless multipath transmission method of claim 4, wherein, the encoded data packet further carries a process identifier representing an encoding transmission process;
the step of decoding the received data packets to obtain the original data packets comprises: the data receiving end placing data packets with a same process identifier into a same buffer to decode.

6. The wireless multipath transmission method of claim 1, 4 or 5, wherein, after the step of the data receiving end decoding the received data packets to obtain the original data packets, the method further comprises:
the data receiving end transmitting and feeding back reception success information to the data transmitting end; the data transmitting end terminating the transmission of remaining data in the encoded data packets and related to the original data packets obtained through the decoding, starting a new round of original data transmission and notifying the data receiving end that what the data transmitting end transmits are new data; or
the data receiving end feeding back serial numbers of successfully received, not successfully received and not received data packets to the data transmitting end; the data transmitting end determining whether the data receiving end has successfully obtained the original data packets based on the information fed back by the data receiving end, and if yes, terminating the transmission of remaining data in the encoded data packets and related to the original data packets obtained through the decoding, and starting a new round of original data transmission and notifying the data receiving end that what the data transmitting end transmits are new data.

7. The wireless multipath transmission method of claim 1, wherein, the step of the data transmitting end transmitting the encoded data packets to a data receiving end via different transmission links comprises:
the data transmitting end determining transmission links used to transmit the encoded data packets as well as a number of data packets transmitted in each transmission link according to a bit rate of the encoding, a link status, and/or a link bandwidth.

8. The wireless multipath transmission method of claim 7, wherein, the different transmission links comprise: macro cell links and small cell links;
or, source cell links and target cell links;
or, long term evolution, LTE, links and non-LTE links, wherein the non-LTE links comprise wireless local area network, WLAN, links and/or third-generation cellular communication, 3G, links;
or, LTE licensed band links and LTE unlicensed band links;
or, LTE licensed band links and LTE shared band links;
or, frequency division duplex, FDD, links and time division duplex, TDD, links;
or, LTE low frequency links and LTE high frequency links;
or, fourth generation cellular communication, 4G, links and fifth generation cellular communication, 5G, links;
or, 3G links and wireless local area network, WLAN, links,
and, wherein, the transmission links are: downlink transmission links, uplink transmission links, relay transmission links, or device to device, D2D, communication links.

9. The wireless multipath transmission method of claim 7 or 8, wherein,
the transmission links are downlink transmission links;
the method further comprises:
a network side where the data transmitting end is located notifying the data receiving end of configuration information of the encoding;
the data receiving end decoding the data according to the configuration information of the encoding; wherein the configuration information of the encoding comprises: the number of original data packets and the bit rate of the encoding.

10. The wireless multipath transmission method of claim 7 or 8, wherein,
the transmission links are uplink transmission links;
the method further comprises:
a network side where the data receiving end is located notifying the data transmitting end of configuration information of the encoding;
the data transmitting end encoding the data based on the configuration information of the encoding; wherein, the configuration information of the encoding comprises: the number of original data packets and the bit rate of the encoding.

11. The wireless multipath transmission method of claim 1, wherein, the method further comprises: the network side where the data transmitting end is located notifying the data receiving end to start and exit an encoded data transmission mode.

12. A wireless data transmitting device, comprising a preprocessing module (811) and a distributing module (812); wherein,
the preprocessing module (811) is configured to: encode original data packets into N data packets, wherein K data packets are original data packets and (N-K) data packets are redundant data packets, K and N are positive integers greater than 1, and N>K, and output the encoded data packets to the distributing module;
the distributing module (812) is configured to: determine transmission links used for transmitting the encoded data packets, and transmit the encoded data packets to a data receiving device through the determined transmission links; whereby more original data packets are assigned to links whose link status is better or more stable, while more redundant data packets are assigned to links whose link status is bad or unstable;
wherein the original data packets are packet data convergence protocol, PDCP, service data units, SDUs, or protocol data units, PDUs;
the preprocessing module (811) is further configured to: encode the original data packets in a PDCP layer; or,
encode the original data packets in a radio link control, RLC, layer.

13. The wireless data transmitting device of claim 12, wherein, the preprocessing module (811) is further configured to: perform PDCP header compression on the original data packets,
or,
wherein, the preprocessing module (811) is further configured to: perform PDCP layer encryption on the original data packets.

14. The wireless data transmitting device of any one of claims 12∼13, wherein, the distributing module (812) is further configured to: after receiving a feedback of reception success from the data receiving device, terminate the transmission of remaining data in the encoded data packets and related to the original data packets obtained through the decoding,
or,
wherein, the distributing module (812) is further configured to: based on the reception success fed back by the data receiving device as well as serial numbers of successfully received as well as not successfully received or not received data packets, determine whether the data receiving device has successfully obtained the original data packets, and if yes, terminate the transmission of the remaining data in the encoded data packets and related to the original data packets obtained through the decoding.

15. A wireless data receiving device, comprising a merging module (821), wherein the merging module (821) is configured to: receive data packets from different transmission links, and decode the received data packets to obtain original data packets; wherein the received data packets are at least one of N encoded data packets from a data transmitting end, wherein the N encoded data packets comprise K original data packets and (N-K) redundant data packets, K and N are positive integers greater than 1, and N>K; and more original data packets are assigned to links whose link status is better or more stable to the wireless data receiving device, while more redundant data packets are assigned to links whose link status is bad or unstable to the wireless data receiving device;
wherein the original data packets are packet data convergence protocol, PDCP, service data units, SDUs, or protocol data units, PDUs;
the received data packets are encoded in a PDCP layer based on the original data packets at a wireless data transmitting end; or,
the received data packets are encoded in a radio link control, RLC, layer based on the original data packets at the wireless data transmitting end.

16. The wireless data receiving device of claim 15, wherein, the merging module (821) is further configured to: feed back a reception success message to a data transmitting device,
or,
wherein, the merging module (821) in the data receiving device is further configured to: after decoding to obtain the original data packets, feed back serial numbers of successfully received, as well as not successfully received or not received data packets to the data transmitting device.

17. A base station, **characterized in that** the base station is provided with the data transmitting device of any one of claims 12 to 14, and/or the data receiving device of any one of claims 15 to 16.

18. The base station of claim 17, wherein, the base station is further configured to: notify configuration information of encoding.

19. A terminal, **characterized in that** the terminal is provided with the data transmitting device of any one of claims 12 to 14, and/or the data receiving device of any one of claims 15 to 16.

20. The terminal of claim 19, wherein, the terminal is further configured to: receive configuration information of encoding.

## Patentansprüche

1. Drahtloses Mehrwege-Übertragungsverfahren, umfassend:
ein Datenübertragungsende, das ursprüngliche Datenpakete in N Datenpakete codiert, wobei K Datenpakete ursprüngliche Datenpakete sind und (N-K) Datenpakete redundante Datenpakete sind, K und N positive ganze Zahlen größer als 1 sind, und N>K (300);
das Datenübertragungsende überträgt die codierten Datenpakete über verschiedene Übertragungsverbindungen (301) an ein Datenempfangsendgerät, wobei den Verbindungen, deren Verbindungsstatus besser oder stabiler ist, mehrere ursprüngliche Datenpakete zugewiesen werden, während den Verbindungen, deren Verbindungsstatus schlecht oder instabil ist, mehrere redundante Datenpakete zugewiesen werden;
das Datenempfangsende empfängt Datenpakete von verschiedenen Übertragungsverbindungen und decodiert die empfangenen Datenpakete, um die ursprünglichen Datenpakete (302) zu erhalten;
und wobei die ursprünglichen Datenpakete Paketdatenkonvergenzprotokoll, PDCP, Servicedateneinheiten, SDU, oder Protokolldateneinheiten, PDU, sind;
der Schritt eines Datenübertragungsendes, das ursprüngliche Datenpakete codiert, umfasst:
das Datenübertragungsende, das die ursprünglichen Datenpakete in einer PDCP-Schicht codiert; oder,
das Datenübertragungsende, das die ursprünglichen Datenpakete in einer Funkverbindungssteuerungs-, RLC-Schicht codiert.

2. Drahtloses Mehrwege-Übertragungsverfahren nach Anspruch 1, wobei das Verfahren vor einem Schritt des Datenübertragungsendes, das mehrere ursprüngliche Datenpakete codiert, ferner umfasst: das Datenübertragungsende, das eine Paketdatenkonvergenzprotokoll-, PDCP-Headerkomprimierung auf die ursprünglichen Datenpakete durchführt,
oder
wobei vor einem Schritt des Datenübertragungsendes, das mehrere ursprüngliche Datenpakete codiert, das Verfahren ferner umfasst: das Datenübertragungsende, das eine PDCP-Schichtverschlüsselung auf die ursprünglichen Datenpakete durchführt.

3. Drahtloses Mehrwege-Übertragungsverfahren nach Anspruch 1, wobei die Codierung eine Vorwärtsfehlerkorrektur-, FEC-Codierung ist.

4. Drahtloses Mehrwege-Übertragungsverfahren nach Anspruch 1, wobei die codierten Datenpakete Seriennummern tragen; oder die codierten Datenpakete tragen Seriennummern und Anzeigeinformationen, die angeben, ob codiert werden soll;
der Schritt des Decodierens der empfangenen Datenpakete zum Erhalten der ursprünglichen Datenpakete umfasst: das Decodieren des Datenempfangsendes gemäß den in empfangenen Datenpaket-Headern und Inhalte der Datenpakete getragenen Seriennummern, um die ursprünglichen Datenpakete wiederherzustellen.

5. Drahtloses Mehrwege-Übertragungsverfahren nach Anspruch 4, wobei das codierte Datenpaket ferner eine Prozesskennung trägt, die einen Codierungsübertragungsprozess darstellt;
der Schritt des Decodierens der empfangenen Datenpakete zum Erhalten der ursprünglichen Datenpakete umfasst: das Datenempfangsende, das Datenpakete mit derselben Prozesskennung in denselben Puffer zum Decodieren stellt.

6. Drahtloses Mehrwege-Übertragungsverfahren nach Anspruch 1, 4 oder 5, wobei nach dem Schritt des Datenempfangsendes, der die empfangenen Datenpakete decodiert, um die ursprünglichen Datenpakete zu erhalten, das Verfahren ferner umfasst:
das Datenempfangsende überträgt und führt Empfangserfolgsinformationen an das Datenübertragungsende zurück; das Datenübertragungsende beendet die Übertragung der verbleibenden Daten in den codierten Datenpaketen und in Bezug auf die ursprünglichen Datenpakete, die durch die Decodierung erhalten wurden, startet eine neue Runde der ursprünglichen Datenübertragung und benachrichtigt an das Datenempfangsende, dass was das Datenübertragungsende überträgt, neue Daten sind; oder
das Datenempfangsende führt Seriennummern von erfolgreich empfangenen, nicht erfolgreich empfangenen und nicht empfangenen Datenpaketen an das Datenübertragungsende zurück; das Datenübertragungsende bestimmt, ob das Datenempfangsende die ursprünglichen Datenpakete erfolgreich erhalten hat, basierend auf den Informationen, die vom Datenempfangsende zurückgeführt werden, und wenn ja, beendet es die Übertragung der verbleibenden Daten in den codierten Datenpaketen und in Bezug auf die ursprünglichen Datenpakete, die durch die Decodierung erhalten werden, und startet eine neue Runde der ursprünglichen Datenübertragung und benachrichtigt an das Datenempfangsende, dass was das Datenübertragungsende überträgt, neue Daten sind.

7. Drahtloses Mehrwege-Übertragungsverfahren nach Anspruch 1, wobei der Schritt des Datenübertragungsendes, der die codierten Datenpakete über verschiedene Übertragungsverbindungen an ein Datenempfangsende überträgt, umfasst:
das Datenübertragungsende bestimmt Übertragungsverbindungen, die zum Übertragen der codierten Datenpakete verwendet werden, sowie eine Anzahl von Datenpaketen, die in jeder Übertragungsverbindung gemäß einer Bitrate der Codierung, einem Verbindungsstatus und/oder einer Verbindungsbandbreite übertragen werden.

8. Drahtloses Mehrwege-Übertragungsverfahren nach Anspruch 7, wobei die verschiedenen Übertragungsverbindungen umfassen:
Makrozellenverbindungen und Kleinzellenverbindungen;
oder Quellzellenverbindungen und Zielzellenverbindungen;
oder Langzeitentwicklung-, LTE-Verbindungen und nicht-LTE-Verbindungen, wobei die nicht-LTE-Verbindungen drahtlose lokale Netzwerk, WLAN-Verbindungen und/oder zellulare Kommunikation der dritten Generation, 3G-Verbindungen umfassen;
oder LTE-lizenzierte Bandverbindungen und LTEnicht lizenzierte Bandverbindungen;
oder LTE-lizenzierte Bandverbindungen und gemeinsam genutzte LTE-Bandverbindungen;
oder Frequenzduplex, FDD-Verbindungen und Zeitduplex, TDD-Verbindungen;
oder LTE-Niederfrequenzverbindungen und LTE-Hochfrequenzverbindungen;
oder zellulare Kommunikation der vierten Generation, 4G-Verbindungen und zellulare Kommunikation der fünften Generation, 5G-Verbindungen;
oder 3G-Verbindungen und drahtloses lokales Netzwerk, WLAN-Verbindungen,
und wobei die Übertragungsverbindungen sind: Abwärtsübertragungsverbindungen, Aufwärtsübertragungsverbindungen, Relaisübertragungsverbindungen oder Gerät zu Gerät-, D2D-Kommunikationsverbindungen.

9. Drahtloses Mehrwege-Übertragungsverfahren nach Anspruch 7 oder 8, wobei
die Übertragungsverbindungen Abwärtsübertragungsverbindungen sind;
wobei das Verfahren ferner umfasst:
eine Netzwerkseite, auf der sich das Datenübertragungsende befindet, die das Datenempfangsende der Konfigurationsinformationen über die Codierung informiert;
das Datenempfangsende decodiert die Daten gemäß den Konfigurationsinformationen der Codierung; wobei die Konfigurationsinformationen der Codierung umfassen: die Anzahl der ursprünglichen Datenpakete und die Bitrate der Codierung.

10. Drahtloses Mehrwege-Übertragungsverfahren nach Anspruch 7 oder 8, wobei
die Übertragungsverbindungen Aufwärtsübertragungsverbindungen sind;
wobei das Verfahren ferner umfasst:
eine Netzwerkseite, auf der sich das Datenempfangsende befindet, die das Datenübertragungsende der Konfigurationsinformationen der Codierung benachrichtigt;
das Datenübertragungsende codiert die Daten basierend auf den Konfigurationsinformationen der Codierung; wobei die Konfigurationsinformationen der Codierung umfasst: die Anzahl der ursprünglichen Datenpakete und die Bitrate der Codierung.

11. Drahtloses Mehrwege-Übertragungsverfahren nach Anspruch 1, wobei das Verfahren ferner umfasst: die Netzwerkseite, auf der sich das Datenübertragungsende befindet, benachrichtigt das Datenempfangsende, um einen codierten Datenübertragungsmodus zu starten und zu verlassen.

12. Drahtlose Datenübertragungsvorrichtung, umfassend ein Vorverarbeitungsmodul (811) und ein Verteilungsmodul (812); wobei,
das Vorverarbeitungsmodul (811) konfiguriert ist zum: Codieren von ursprünglichen Datenpaketen in N Datenpakete, wobei K Datenpakete ursprüngliche Datenpakete sind, und (N-K) Datenpakete redundante Datenpakete sind, K und N positive ganze Zahlen größer als 1 sind, und N>K, und Ausgaben der codierten Datenpakete an das Verteilungsmodul;
das Verteilungsmodul (812) konfiguriert ist, um:
Bestimmen der Übertragungsverbindungen, die zum Senden der codierten Datenpakete verwendet werden, und Übertragen der codierten Datenpakete über die bestimmten Übertragungsverbindungen an eine Datenempfangsvorrichtung; wobei den Verbindungen, deren Verbindungsstatus besser oder stabiler ist, mehrere ursprüngliche Datenpakete zugewiesen werden, während den Verbindungen, deren Verbindungsstatus schlecht oder instabil ist, mehrere redundante Datenpakete zugewiesen werden;
wobei die ursprünglichen Datenpakete Paketdatenkonvergenzprotokoll, PDCP, Servicedateneinheiten, SDU, oder Protokolldateneinheiten, PDU, sind;
wobei das Vorverarbeitungsmodul (811) ferner konfiguriert ist, zum: Codieren der ursprünglichen Datenpakete in einer PDCP-Schicht; oder,
Codieren der ursprünglichen Datenpakete in einer Funkverbindungssteuerungs-, RLC-Schicht.

13. Drahtlose Datenübertragungsvorrichtung nach Anspruch 12, wobei das Vorverarbeitungsmodul (811) ferner konfiguriert ist, um: eine PDCP-Headerkomprimierung für die ursprünglichen Datenpakete durchzuführen,
oder
wobei das Vorverarbeitungsmodul (811) ferner konfiguriert ist, um: eine PDCP-Schichtverschlüsselung für die ursprünglichen Datenpakete durchzuführen.

14. Drahtlose Datenübertragungsvorrichtung nach einem der Ansprüche 12 bis 13, wobei das Verteilungsmodul (812) ferner konfiguriert ist, zum: nach dem Empfangen einer Rückmeldung des Empfangserfolgs von der Datenempfangsvorrichtung, Beenden der Übertragung verbleibender Daten in den codierten Datenpaketen und in Bezug auf die ursprünglichen Datenpakete, die durch die Decodierung erhalten wurden,
oder,
wobei das Verteilungsmodul (812) ferner konfiguriert ist, zum: anhand des von der Datenempfangsvorrichtung zurückgeführt Empfangserfolgs sowie der Seriennummern der erfolgreich empfangenen sowie nicht erfolgreich empfangenen oder nicht empfangenen Datenpakete, Bestimmen, ob die Datenempfangsvorrichtung die ursprünglichen Datenpakete erfolgreich erhalten hat, und wenn ja, Beenden der Übertragung der verbleibenden Daten in den codierten Datenpaketen und in Bezug auf die ursprünglichen Datenpakete, die durch die Decodierung erhalten wurden.

15. Drahtlose Datenempfangsvorrichtung, umfassend ein Zusammenführungsmodul (821), wobei das Zusammenführungsmodul (821) konfiguriert ist, zum:
Empfangen von Datenpaketen von verschiedenen Übertragungsverbindungen, und Decodieren der empfangenen Datenpakete, um ursprüngliche Datenpakete zu erhalten; wobei die empfangenen Datenpakete mindestens eines von N codierten Datenpaketen vom Datenübertragungsende sind, wobei die N codierten Datenpakete K ursprüngliche Datenpakete und (N-K) redundante Datenpakete umfassen, K und N positive ganze Zahlen größer als 1 sind, und N>K; und den Verbindungen, deren Verbindungsstatus für die drahtlose Datenempfangsvorrichtung besser oder stabiler ist, mehrere ursprüngliche Datenpakete zugewiesen werden, während den Verbindungen, deren Verbindungsstatus für die drahtlose Datenempfangsvorrichtung schlecht oder instabil ist, mehrere redundante Datenpakete zugewiesen werden;
wobei die ursprünglichen Datenpakete Paketdatenkonvergenzprotokoll, PDCP, Servicedateneinheiten, SDU, oder Protokolldateneinheiten, PDU, sind;
die empfangenen Datenpakete in einer PDCP-Schicht basierend auf den ursprünglichen Datenpaketen an einem drahtlosen Datenübertragungsende codiert werden; oder,
die empfangenen Datenpakete in einer Funkverbindungssteuerungs-, RLC-Schicht basierend auf den ursprünglichen Datenpaketen an dem drahtlosen Datenübertragungsende codiert werden.

16. Drahtlose Datenempfangsvorrichtung nach Anspruch 15, wobei das Zusammenführungsmodul (821) ferner konfiguriert ist, um: eine Empfangserfolgsnachricht an eine Datenübertragungsvorrichtung zurückzuführen,
oder,
wobei das Zusammenführungsmodul (821) in der Datenempfangsvorrichtung ferner konfiguriert ist, um: nach dem Decodieren zum Erhalten der ursprünglichen Datenpakete, Seriennummern von erfolgreich empfangenen sowie nicht erfolgreich empfangenen oder nicht empfangenen Datenpaketen an die Datenübertragungsvorrichtung zurückzuführen.

17. Basisstation, **dadurch gekennzeichnet, dass** die Basisstation mit der Datenübertragungsvorrichtung nach einem der Ansprüche 12 bis 14 und/oder der Datenempfangsvorrichtung nach einem der Ansprüche 15 bis 16 versehen ist.

18. Basisstation nach Anspruch 17, wobei die Basisstation ferner konfiguriert ist, um: Konfigurationsinformationen der Codierung zu benachrichtigen.

19. Endgerät, **dadurch gekennzeichnet, dass** das Endgerät mit der Datenübertragungsvorrichtung nach einem der Ansprüche 12 bis 14 und/oder der Datenempfangsvorrichtung nach einem der Ansprüche 15 bis 16 versehen ist.

20. Endgerät nach Anspruch 19, wobei das Endgerät ferner konfiguriert ist, um: Konfigurationsinformationen der Codierung zu empfangen.

## Revendications

1. Procédé d'émission à trajets multiples sans fil, comprenant:
une extrémité d'émission de données codant des paquets de données d'origine en N paquets de données, où K paquets de données sont des paquets de données d'origine et (N-K) paquets de données sont des paquets de données redondants, K et N sont des entiers positifs supérieurs à 1, et N>K (300);
l'extrémité d'émission de données émettant les paquets de données codés à un terminal de réception de données via différentes liaisons d'émission (301), moyennant quoi plusieurs paquets de données d'origine sont attribués à des liaisons dont l'état de liaison est meilleur ou plus stable, tandis que des paquets de données plus redondants sont attribués à des liaisons dont l'état de la liaison est mauvais ou instable;
l'extrémité de réception de données recevant des paquets de données provenant de différentes liaisons d'émission, et décodant les paquets de données reçus pour obtenir les paquets de données d'origine (302),
et où, les paquets de données d'origine sont un protocole de convergence de données par paquets, PDCP, des unités de données de services, SDU, ou des unités de données de protocole, PDU;
l'étape de codage par une extrémité d'émission de données des paquets de données d'origine comprend:
l'extrémité d'émission de données codant les paquets de données d'origine dans une couche PDCP; ou,
l'extrémité d'émission de données codant les paquets de données d'origine dans une couche de commande de liaison radio, RLC.

2. Procédé d'émission à trajets multiples sans fil selon la revendication 1, dans lequel, avant une étape de codage par une extrémité d'émission de données d'une pluralité de paquets de données d'origine, le procédé comprend en outre: l'extrémité d'émission de données exécutant une compression d'en-tête du protocole de convergence de données par paquets, PDCP, sur les paquets de données d'origine,
ou,
où, avant une étape de codage par l'extrémité d'émission de données d'une pluralité de paquets de données d'origine, le procédé comprend en outre: l'extrémité d'émission de données effectuant un cryptage de couche PDCP sur les paquets de données d'origine.

3. Procédé d'émission à trajets multiples sans fil selon la revendication 1, dans lequel ledit codage est un codage à correction d'erreur directe, FEC.

4. Procédé d'émission à trajets multiples sans fil selon la revendication 1, dans lequel, les paquets de données codés portent des numéros de série; ou les paquets de données codés portent des numéros de série et des informations d'indication indiquant s'il faut coder;
l'étape de décodage des paquets de données reçus pour obtenir les paquets de données d'origine comprend: le décodage par l'extrémité de réception de données selon les numéros de série portés dans les en-têtes de paquets de données reçus et dans les contenus des paquets de données pour restaurer les paquets de données d'origine.

5. Procédé d'émission à trajets multiples sans fil selon la revendication 4, dans lequel, le paquet de données codé porte en outre un identifiant de processus représentant un processus d'émission de codage;
l'étape de décodage des paquets de données reçus pour obtenir les paquets de données d'origine comprend: l'extrémité de réception de données plaçant des paquets de données avec un même identifiant de processus dans un même tampon à décoder.

6. Procédé d'émission à trajets multiples sans fil selon la revendication 1, 4 ou 5, dans lequel, après l'étape de décodage par l'extrémité de réception de données des paquets de données reçus pour obtenir les paquets de données d'origine, le procédé comprend en outre:
l'extrémité de réception de données émettant et renvoyant des informations de succès de réception à l'extrémité d'émission de données; l'extrémité d'émission de données mettant fin à l'émission des données restantes dans les paquets de données codés et liées aux paquets de données d'origine obtenus par le décodage, commençant un nouveau cycle d'émission de données d'origine et notifiant à l'extrémité de réception de données que ce que l'extrémité d'émission de données émet sont des nouvelles données; ou
l'extrémité de réception de données renvoyant des numéros de série de paquets de données reçus avec succès, non reçus avec succès et non reçus à l'extrémité d'émission de données; l'extrémité d'émission de données déterminant si l'extrémité de réception de données a obtenu avec succès les paquets de données d'origine sur la base des informations renvoyées par l'extrémité de réception de données, et si oui, terminer l'émission des données restantes dans les paquets de données codés et liées aux paquets de données d'origine obtenus par le décodage, et démarrer un nouveau cycle d'émission de données d'origine et notifier à l'extrémité de réception de données que ce que l'extrémité d'émission de données émet sont des nouvelles données.

7. Procédé d'émission à trajets multiples sans fil selon la revendication 1, dans lequel, l'étape de l'extrémité d'émission de données émettant les paquets de données codés vers une extrémité de réception de données via des différents liaisons d'émission comprend:
l'extrémité d'émission de données déterminant des liaisons d'émission utilisées pour émettre les paquets de données codés ainsi qu'un nombre de paquets de données émis dans chaque liaison d'émission en fonction d'un débit binaire du codage, d'un état de liaison, et/ou d'une bande passante de liaison.

8. Procédé d'émission à trajets multiples sans fil selon la revendication 7, dans lequel, les différentes liaisons d'émission comprennent: des liaisons macrocellulaires et des liaisons à petites cellules;
ou, des liaisons de cellules source et des liaisons de cellules cible;
ou, des liaisons d'évolution à long terme, LTE, et des liaisons non LTE, où les liaisons non LTE comprennent des liaisons de réseau local sans fil, WLAN, et/ou des liaisons par communication cellulaire de troisième génération, 3G;
ou, des liaisons de bande sous licence LTE et des liaisons de bande sans licence LTE;
ou, des liaisons de bande sous licence LTE et des liaisons de bande partagée LTE;
ou, des liaisons de duplex à répartition en fréquence, FDD, et des liaisons de duplex à répartition temporelle, TDD;
ou, des liaisons basse fréquence LTE et des liaisons haute fréquence LTE;
ou, des liaisons par communication cellulaire de quatrième génération, 4G, et des liaisons par communication cellulaire de cinquième génération, 5G;
ou, des liaisons 3G et des liaisons de réseau local sans fil, WLAN,
et, où, les liaisons d'émission sont: des liaisons d'émission en liaison descendante, des liaisons d'émission en liaison montante, des liaisons d'émission de relais, ou des liaisons de communication de dispositif à dispositif, D2D.

9. Procédé d'émission à trajets multiples sans fil selon la revendication 7 ou 8, dans lequel,
les liaisons d'émission sont des liaisons d'émission en liaison descendante;
le procédé comprend en outre:
un côté réseau où se trouve l'extrémité d'émission de données notifiant à l'extrémité de réception de données des informations de configuration du codage;
l'extrémité de réception de données décodant les données selon les informations de configuration du codage; où les informations de configuration du codage comprennent: le nombre de paquets de données d'origine et le débit binaire du codage.

10. Procédé d'émission à trajets multiples sans fil selon la revendication 7 ou 8, dans lequel,
les liaisons d'émission sont des liaisons d'émission en liaison montante;
le procédé comprend en outre:
un côté réseau où se trouve l'extrémité de réception de données notifiant à l'extrémité d'émission de données des informations de configuration du codage;
l'extrémité d'émission de données codant les données sur la base des informations de configuration du codage; où, les informations de configuration du codage comprennent: le nombre de paquets de données d'origine et le débit binaire du codage.

11. Procédé d'émission à trajets multiples sans fil selon la revendication 1, dans lequel le procédé comprend en outre: le côté réseau où se trouve l'extrémité d'émission de données notifiant à l'extrémité de réception des données pour démarrer et quitter un mode d'émission de données codées.

12. Dispositif d'émission de données sans fil, comprenant un module de prétraitement (811) et un module de distribution (812); où,
le module de prétraitement (811) est configuré pour: coder des paquets de données d'origine en N paquets de données, où K paquets de données sont des paquets de données d'origine et (N-K) paquets de données sont des paquets de données redondants, K et N sont des entiers positifs supérieurs à 1, et N>K, et émettre les paquets de données codés vers le module de distribution;
le module de distribution (812) est configuré pour: déterminer des liaisons d'émission utilisées pour émettre les paquets de données codés, et émettre les paquets de données codés vers un dispositif de réception de données via les liaisons d'émission déterminées; moyennant quoi plusieurs paquets de données d'origine sont attribués à des liaisons dont l'état de liaison est meilleur ou plus stable, tandis que des paquets de données plus redondants sont attribués à des liaisons dont l'état de liaison est mauvais ou instable;
où les paquets de données d'origine sont un protocole de convergence de données par paquets, PDCP, des unités de données de services, SDU, ou des unités de données de protocole, PDU;
le module de prétraitement (811) est en outre configuré pour: coder les paquets de données d'origine dans une couche PDCP; ou,
encoder les paquets de données d'origine dans une couche de contrôle de liaison radio, RLC.

13. Dispositif d'émission de données sans fil selon la revendication 12, dans lequel, le module de prétraitement (811) est en outre configuré pour: effectuer une compression d'en-tête PDCP sur les paquets de données d'origine,
ou,
où, le module de prétraitement (811) est en outre configuré pour: effectuer un cryptage de couche PDCP sur les paquets de données d'origine.

14. Dispositif d'émission de données sans fil selon l'une quelconque des revendications 12 à 13, dans lequel, le module de distribution (812) est en outre configuré pour: après avoir reçu une rétroaction de succès de réception à partir du dispositif de réception de données, terminer l'émission des données restantes dans les paquets de données codés et liées aux paquets de données d'origine obtenus par le décodage,
ou,
où, le module de distribution (812) est en outre configuré pour: sur la base du succès de réception renvoyé par le dispositif de réception de données ainsi que des numéros de série des paquets de données reçus avec succès ainsi que non reçus avec succès ou non reçus, déterminer si le dispositif de réception de données à obtenu avec succès les paquets de données d'origine, et si oui, mettre fin à l'émission des données restantes dans les paquets de données codées et liées aux paquets de données d'origine obtenus par le décodage.

15. Dispositif de réception de données sans fil, comprenant un module de fusion (821), dans lequel le module de fusion (821) est configuré pour: recevoir des paquets de données à partir de différentes liaisons d'émission, et décoder les paquets de données reçus pour obtenir des paquets de données d'origine; où les paquets de données reçus sont au moins l'un des N paquets de données codés à partir de l'extrémité d'émission de données, où les N paquets de données codés comprennent K paquets de données d'origine et (N-K) paquets de données redondants, K et N sont des entiers positifs supérieurs à 1, et N>K; et plusieurs paquets de données d'origine sont attribués à des liaisons dont l'état de liaison est meilleur ou plus stable par rapport au dispositif de réception de données sans fil, tandis que des paquets de données plus redondants sont attribués à des liaisons dont l'état de liaison est mauvais ou instable par rapport au dispositif de réception de données sans fil;
où les paquets de données d'origine sont le protocole de convergence de données par paquets, PDCP, des unités de données de services, SDU, ou des unités de données de protocole, PDU;
les paquets de données reçus sont codés dans une couche PDCP sur la base des paquets de données d'origine à une extrémité d'émission de données sans fil; ou,
les paquets de données reçus sont codés dans une couche de commande de liaison radio, RLC, sur la base des paquets de données d'origine à l'extrémité d'émission de données sans fil.

16. Dispositif de réception de données sans fil selon la revendication 15, dans lequel, le module de fusion (821) est en outre configuré pour: renvoyer un message de succès de réception à un dispositif d'émission de données,
ou,
où, le module de fusion (821) dans le dispositif de réception de données est en outre configuré pour: après le décodage obtenir les paquets de données d'origine, renvoyer les numéros de série des paquets de données reçus avec succès, ainsi que non reçus avec succès ou non reçus au dispositif d'émission de données.

17. Station de base, **caractérisée en ce que** la station de base est pourvue du dispositif d'émission de données selon l'une quelconque des revendications 12 à 14, et/ou du dispositif de réception de données selon l'une quelconque des revendications 15 à 16.

18. Station de base selon la revendication 17, dans laquelle, la station de base est en outre configurée pour: notifier des informations de configuration de codage.

19. Terminal, **caractérisé en ce que** le terminal est pourvu du dispositif d'émission de données selon l'une quelconque des revendications 12 à 14, et/ou du dispositif de réception de données selon l'une quelconque des revendications 15 à 16.

20. Terminal selon la revendication 19, dans lequel le terminal est en outre configuré pour: recevoir des informations de configuration de codage.
